# EUROPÄISCHE PATENTSCHRIFT

(11) **EP 3 073 333 B1**
(45) Veröffentlichungstag und Bekanntmachung des Hinweises auf die Patenterteilung: **22.01.2020**
(21) Anmeldenummer: 15160378.4
(22) Anmeldetag: 23.03.2015
(51) Int. Cl.: G05B 9/03, F23D 14/00, F23N 5/24

(54) **Brenneranlage mit einer Sicherheitseinrichtung**
Burner assembly with a safety device
Installation de brûleur avec un dispositif de sécurité

(43) Veröffentlichungstag der Anmeldung: 28.09.2016
(73) Patentinhaber: Siemens Aktiengesellschaft, 80333 München (DE)
(72) Erfinder: Obrecht, Klaus, 76534 Baden-Baden (DE)
(74) Vertreter: Maier, Daniel Oliver

(56) Entgegenhaltungen:
- DE-A1-102005 030 770
- US-A1- 2013 245 794

## Beschreibung

Die vorliegende Offenbarung bezieht sich auf Brenneranlagen mit Sicherheitseinrichtungen. Im Zentrum der Sicherheitsarchitektur gemäss der vorliegenden Offenbarung steht Fehlersicherheit.

Sicherheitsarchitekturen werden unter anderem behandelt im Standard IEC 61508. Jene Norm wurde im Jahr 2010 als 2. Ausgabe veröffentlicht. Sie befasst sich mit funktionaler Sicherheit elektrischer / elektronischer / programmierbarer Systeme in Zusammenhang mit Sicherheit.

Ferner beschreiben die Nomen EN13611 - Sicherheits-, Regel- und Steuereinrichtungen für Gasbrenner und Gasgeräte - aus dem Jahr 2011 sowie EN60730 - Automatische elektrische Regel- und Steuergeräte für den Hausgebrauch und ähnliche Anwendungen - ebenso aus dem Jahr 2011 Mindestanforderungen an Sicherheitssysteme.

Sicherheitsgerichtete Steuerungen sind unter anderem aus den Bereichen der Brenneranlagen, der Automatisierungstechnik, der Medizintechnik und der Fahrzeugtechnik bekannt.

Im Stand der Technik ist bekannt, dass in Systemen für sicherheitskritische Aufgaben Massnahmen zum Schutz vor Fehlfunktionen getroffen werden müssen. Dazu zählt beispielsweise die Überwachung von Funktionsblöcken einer Sicherheitseinrichtung durch Testsignale. Weiterhin bekannt ist die die mehrkanalige Ausführung einer Sicherheitsarchitektur mit Ergebnisvergleich.

Anhand dieser Massnahmen sollen zufällig auftretende (und optional auch systematisch auftretende) Fehler erkannt werden. Anhand einer Überwachungseinheit ist ein sicherer Zustand einer (Brenner-)Anlage oder eines Prozesses zu erreichen.

Im Zusammenhang mit Sicherheitsarchitekturen und den entsprechenden Sicherheitskreisen wird unterschieden zwischen fehlertoleranten und fehlersicheren Architekturen. Fehlertolerante Architekturen zeichnen sich dadurch aus, dass auch nach dem Auftreten eines oder mehrerer Fehler weiterhin Steuerungs- und Überwachungsaufgaben ausgeführt werden können. Um eine solche Toleranz gegenüber zufällig auftretenden Fehlern erreichen zu können, sind die Architekturen vielfach mehrkanalig redundant aufzubauen.

Im Gegensatz zu einer fehlertoleranten Architektur muss ein fehlersicheres System infolge des Auftretens eines ersten Fehlers einen sicheren Anlagezustand erreichen. Dasselbe gilt für weitere auftretende Fehler. Auch in solchen Fällen hat das System einen sicheren Anlagezustand zu erreichen. Es müssen also Erst- und Zweitfehler in der Sicherheitseinrichtung zu einem sicheren Anlagenzustand führen.

Insbesondere die Anforderung der Beherrschung von Mehrfachfehlern führt vielfach zu einer Mehrfachredundanz und erhöht damit die Komplexität der Architektur. Zudem steigert der mehrkanalige Aufbau die Kosten solcher Systeme. Schliesslich trägt der mit dem mehrkanaligen Aufbau verbundene erhebliche Aufwand in Soft- und Hardware vielfach nicht zur eigentlichen Erfüllung der Steuerungsaufgabe und / oder Regelungsaufgabe eines Systems bei.

Die deutsche Patentanmeldung DE102005030770A1 wurde am 1. Juli 2005 angemeldet und am 23. März 2006 veröffentlicht. DE102005030770A1 offenbart eine Schaltungsanordnung und ein Verfahren zum Steuern einer Sicherheitseinrichtung für ein Fahrzeug.

Die US-Patentanmeldung US2013/245794A1 wurde am 6. Oktober 2011 eingereicht und am 19. September 2013 veröffentlicht. US2013/245794A1 lehrt ein Sicherheitsgerät und eine Berechnungsmethode für ein Sicherheitsgerät.

Gegenstand der vorliegenden Offenbarung ist eine verbesserte Sicherheitseinrichtung und / oder Sicherheitsarchitektur, welche die vorgenannten Nachteile bestehender Systeme zumindest teilweise überwindet.

### Technische Aufgabe und Vorteile

Der vorliegenden Offenbarung liegt die Aufgabe zu Grunde, eine Brenneranlage mit einer Sicherheitsarchitektur und / oder einem Sicherheitskreis zu erstellen, die eine kostenoptimierte und effiziente Struktur für eine Sicherheitseinrichtung bereitstellt. Die Sicherheitsarchitektur und / oder der Sicherheitskreis soll insbesondere kostengünstiger als eine mehrfachredundante Ausführung sein. Zugleich sollen zufällige Erst- und Zweitfehler in der Sicherheitseinrichtung zu einem sicheren Anlagenzustand führen. Mithin soll die Sicherheitseinrichtung und / oder der Sicherheitskreis nach der vorliegenden Offenbarung bereits nach dem Auftreten eines ersten Fehlers eine (System-) Abschaltung einleiten. Ein weiterer Betrieb ist nicht erforderlich. Ein zusätzlich unabhängiger Fehler darf nicht in einen unsicheren Anlagenzustand führen.
Die Sicherheitsarchitektur soll also fehlersicher sein.

Die genannte Aufgabe wird erfindungsgemäss gelöst durch eine Brenneranlage mit einer Sicherheitseinrichtung entsprechend dem Anspruch 1. Bevorzugte Ausführungsformen sind in den abhängigen Ansprüchen wiedergegeben.

Der vorliegenden Offenbarung liegt weiterhin die Aufgabe zu Grunde, eine Sicherheitsarchitektur und / oder einen Sicherheitskreis und / oder eine Sicherheitseinrichtung bereit zu stellen, welche (unter anderem) durch Unterbrechung der Energieversorgung, insbesondere durch Unterbrechung der Versorgung mit elektrischem Strom, einen sicheren Anlagenzustand herstellt.
Der vorliegenden Offenbarung liegt darüber hinaus die Aufgabe zu Grunde, eine Sicherheitsarchitektur und / oder einen Sicherheitskreis und / oder eine Sicherheitseinrichtung bereit zu stellen, welche(r) eine (Sicherheits-)Verriegelung ermöglicht.
Der vorliegenden Offenbarung liegt ferner die Aufgabe zu Grunde, eine Sicherheitsarchitektur und / oder einen Sicherheitskreis und / oder eine Sicherheitseinrichtung bereit zu stellen, welche(r) eine Vielzahl (unterschiedlich ausgeführter) Eingangssignale zu überwachen vermag.
Der vorliegenden Offenbarung liegt die weitere Aufgabe zu Grunde, eine Sicherheitsarchitektur und / oder einen Sicherheitskreis und / oder eine Sicherheitseinrichtung bereit zu stellen, welche(r) (zumindest teilweise) auf einem (Mehrkern-)Prozessor mit Redundanz realisiert ist.

Der vorliegenden Offenbarung liegt im Übrigen die Aufgabe zu Grunde, eine Sicherheitsarchitektur und / oder einen Sicherheitskreis und / oder eine Sicherheitseinrichtung bereit zu stellen, welche(r) ausgebildet ist zur Verarbeitung sicherheitsrelevanter analoger oder digitaler Signale.
Der vorliegenden Offenbarung liegt im Übrigen die Aufgabe zu Grunde, eine Sicherheitsarchitektur und / oder einen Sicherheitskreis und / oder eine Sicherheitseinrichtung bereit zu stellen, welche(r) ausgebildet ist zur Verarbeitung (zunächst) statischer Signale.
Der vorliegenden Offenbarung liegt im Übrigen die Aufgabe zu Grunde, eine Sicherheitsarchitektur und / oder einen Sicherheitskreis und / oder eine Sicherheitseinrichtung bereit zu stellen, welche(r) ausgebildet ist, sich selbst regelmässig auf Fehler zu prüfen.

### Kurze Beschreibung der Figuren

Verschiedene Details werden dem Fachmann anhand der folgenden detaillierten Beschreibung zugänglich. Die einzelnen Ausführungsformen sind dabei nicht einschränkend. Die Zeichnungen, welche der Beschreibung beigefügt sind, lassen sich wie folgt beschreiben:
Fig 1 zeigt ein Blockschaltbild eines einfachen Systems mit einer Überwachungseinheit, die eine Sicherheitsfunktion zwischen Ein- und Ausgang ausführen kann.
Fig 2 zeigt ein Blockschaltbild eines einfachen Systems mit einem zusätzlichen Überwachungs- und Diagnosekanal.
Fig 3 zeigt ein Blockschaltbild eines mehrfach redundanten Systems.
Fig 4 veranschaulicht anhand eines Blockschaltbildes die Dynamisierung von Signalen.
Fig 5 veranschaulicht anhand eines Blockschaltbildes die Kontrolle von Ausgangssignalen durch Rückführung.
Fig 6 beschreibt anhand eines Blockschaltbildes Massnahmen wie Redundanz und Kontrollmechanismen zur Verhinderung der Verfälschung digitaler Datensignale.
Fig 7 beschreibt anhand eines Blockschaltbildes verschiedene Wege der Zuführung sicherheitsrelevanter Signale zur Sicherheitsarchitektur.
Fig 8 behandelt anhand eines Blockschaltbildes Massnahmen zur Erkennung weiterer zufällig auftretender Zweitfehler.
Fig 9 veranschaulicht als Blockschaltbild die praktische Umsetzung einer einkanaligen Architektur mit Diagnose durch einen redundanten (Mehrkern-)Prozessor.
Fig 10 veranschaulicht anhand eines Blockschaltbilds die Zuführung sicherheitsrelevanter analoger Signale zu einem redundanten (Mehrkern-)Prozessor.

### Detaillierte Beschreibung

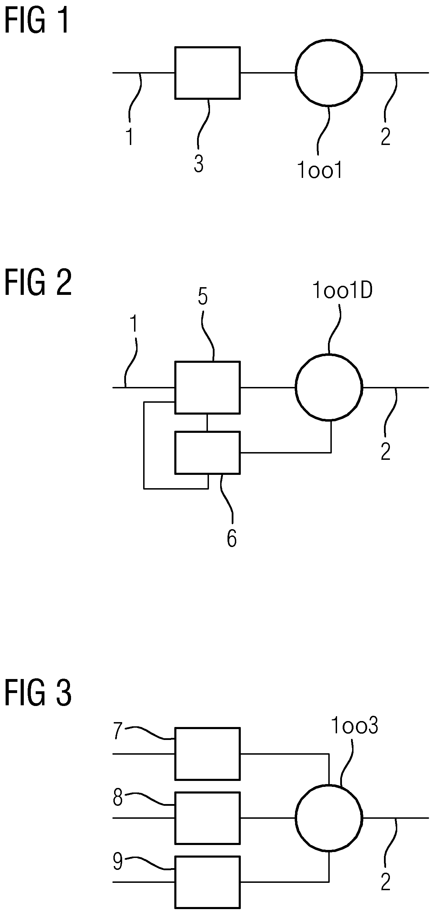

Fig 1 zeigt eine einfache Architektur 1oo1 (Englisch für one out of one) mit einem Eingang 1 und einem Ausgang 2 und einer Überwachungseinheit 3. Ein Ausfall oder ein Fehler in der Überwachungseinheit 3 dieser einfachen Architektur 1oo1 kann dazu führen, dass das System keine Sicherheitsfunktion der Anlage mehr ausführen kann. Daraus folgt, dass weitere Massnahmen zur Beherrschung zufälliger (und optional auch systematischer) Fehler für eine Anlagensicherheit erforderlich sind.

Fig 2 zeigt eine sogenannte 1oo1D Architektur (d. h. ein Kanal mit Diagnose und inhärenter Sicherheit). Die Architektur aus Fig 2 stellt eine Überwachungseinheit 5 bereit, der zunächst eine Sicherheitsfunktion zwischen Eingang 1 und Ausgang 2 ausführen kann. Ein Fehler in der Überwachungseinheit 5 kann aber auch zu einem Ausfall der Sicherheitsfunktion führen. Ein zusätzlicher Überwachungs- und Diagnosekanal 6 stellt sicher, dass ein Fehler in der Überwachungseinheit 5 zu einem sicheren Systemzustand führt. Der Überwachungs- und Diagnosekanal 6 hat dabei die Aufgabe, einerseits auftretende Fehler in der Überwachungseinheit 5 zu erkennen. Andererseits hat der Überwachungs- und Diagnosekanal 6 die Aufgabe, eine sichere Abschaltung durch eine weitere Massnahme erreichen zu können. Die Wirksamkeit der Massnahme ist von der Diagnosefähigkeit des Überwachungs- und Diagnosekanals 6 abhängig.

In Fig 3 ist eine mehrfach redundante Architektur 1oo3 (one out of three) mit einem Ausgang 2 dargestellt. Der Ausfall von einem oder von zwei Kanälen 7, 8, 9 der Überwachung führt zu einer sicherheitsgerichteten Abschaltung durch den dritten funktionsfähigen Kanal. Dabei können bis zu zwei unabhängige Fehler in den Überwachungseinheiten auftreten. Es kann dann dennoch eine sicherheitsgerichtete Abschaltung des Prozesses durchgeführt werden. Dies erfordert jedoch mindestens drei unabhängige Überwachungseinheiten 7, 8, 9. Die Überwachungseinheiten werden im einfachsten Fall redundant ausgeführt. Weitere Varianten wie invers redundante Funktionen oder solche mit Diagnoseeinrichtungen sind vorgesehen und können zusätzlich angewendet werden.

Aus dem Genannten geht hervor, dass der Aufwand in der Architektur steigt, wenn trotz mehrerer Fehler ein sicherer Anlagen- oder Betriebszustand erreicht werden muss.

Eine der Aufgaben der vorliegenden Offenbarung besteht darin, eine Sicherheitsarchitektur bereitzustellen, die Fehlersicherheit für zwei unabhängige Fehler garantiert. Ein weiterer Betrieb nach dem Auftreten eines ersten Fehlers ist nicht erforderlich. Die Architektur muss also nicht zwingend fehlertolerant sein. Ein zusätzlicher unabhängiger Fehler darf nicht zu einem unsicheren Anlagenzustand führen. Die Architektur soll zugleich eine effiziente und kostengünstige Struktur aufweisen.

Um Funktionseinheiten reduzieren zu können, sollten nicht alle Überwachungseinheiten mehrfach ausgeführt werden. Beispielsweise kann der Ergebnisvergleich in der Sicherheitsstruktur kurz vor der Ausgabe der Ergebnissignale durchgeführt werden. In diesem Fall ist in allen Kanälen ein entsprechend hoher Aufwand in den Überwachungseinheiten (siehe Fig 3) erforderlich.

Das Ergebnis einer komplexen Berechnung kann beispielsweise lediglich ein Freigabesignal darstellen. In einem solchen Fall kann die nachfolgende Signalverarbeitung auf die fehlersichere Betrachtung der Freigabesignale reduziert werden. Die korrekte Bearbeitung der Signalverarbeitung kann so in reduzierter Form überwacht werden.
Die Architektur gemäss der vorliegenden Offenbarung berücksichtigt weiterhin, dass das System lediglich fehlersicher ausgeführt werden muss. Fehlertoleranz ist nicht zwingend erforderlich. Entsprechend kann eine Sicherheitsabschaltung und ggf eine Verriegelung bereits nach dem Auftreten eines ersten Fehlers ausgeführt werden.

Voraussetzung für eine kostengünstige Sicherheitsarchitektur ist die Reduzierung der Funktionsblöcke auf minimal erforderliche Einheiten. Die 1oo1D Architektur aus Fig 2 liefert dazu eine Basis. Erstfehler in der Überwachungseinheit 5 werden durch den Überwachungs- und Diagnosekanal 6 erkannt. Sie werden durch eine Sicherheitsabschaltung durch den Überwachungs- und Diagnosekanals 6 beherrscht. Die Diagnosefähigkeit muss dabei so hochwertig (zuverlässig) sein, dass auftretende Fehler sicher erkannt werden.

Mit anderen Worten, die Diagnosefähigkeit sollte Fehler erster Art, d. h. die Nicht-Erkennung auftretender Fehler, vermeiden und / oder vorzugsweise ausschliessen. Zugleich sollte die Diagnosefähigkeit Fehler zweiter Art, d. h. die Erkennung von Nicht-Fehlern als Fehler, vermeiden und / oder vorzugsweise ausschliessen. Gemäss einer speziellen Ausführungsform ist vorgesehen, Fehler im Überwachungs- und Diagnosekanal 6 durch Prüfung der Diagnoseergebnisse zu erkennen.

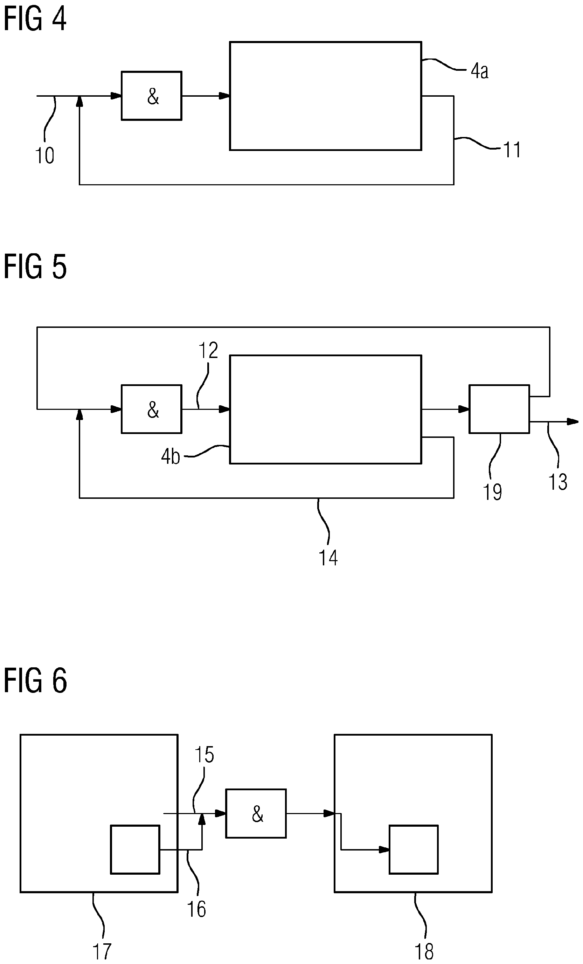

Es werden, wie in Fig 4 gezeigt, alle statischen Signale 10 durch zusätzliche Testsignale 11 dynamisiert. Ziel ist eine kontinuierliche Testbarkeit. Die Sicherheitsarchitektur ist damit in der Lage, wert- und zeitdiskrete Prüfungen von Funktionsblöcken durchführen zu können.

Fig 5 veranschaulicht Massnahmen der Überwachungseinheit bei Ausgangssignalen 13. Die Ausgangssignale 13 werden zur Kontrolle als Eingangssignale 12 der Überwachungseinheit 4b zurückgeführt. Sie erhalten eine entsprechende Dynamisierung durch Testsignale 14. Damit ist auch eine Kontrolle von zunächst statischen Signalen durch die Überwachungseinheit möglich.

Fig 4 und 5 betreffen also die Dynamisierung mittels Testsignalen. Die Überwachungseinrichtung 30 der im Folgenden detailliert offenbarten Sicherheitseinrichtung ist vorzugsweise ausgebildet, mindestens ein Ausgangssignal 31, 37 der Überwachungseinrichtung zu Kontrollzwecken mittels Testsignalen zu dynamisieren. Der Prüfblock 34 der im Folgenden detailliert offenbarten Sicherheitseinrichtung ist vorzugsweise ausgebildet, mindestens ein Ausgangssignal 35 des Prüfblockes 34 zu Kontrollzwecken mittels Testsignalen zu dynamisieren. Die Ausgangsstufe 38 der im Folgenden detailliert offenbarten Sicherheitseinrichtung ist vorzugsweise ausgebildet, mindestens ein Ausgangssignal 39 der Ausgangsstufe 38 zu Kontrollzwecken mittels Testsignalen zu dynamisieren.

Die Signalrückführung erfolgt in Fig 5 nach einem optional vorhandenen Ausgangstreiber und / oder Relaiskontakt 19. Auf diese Weise lässt sich der Wert an der Ausgangsklemme überwachen.

Nach Fig 6 werden digitale Datensignale zwischen einzelnen Funktionseinheiten 17, 18 durch zusätzliche Sicherungsmassnahmen gegen Verfälschung geschützt. Hierbei werden den Nutzdaten 15 zusätzliche Prüfdaten 16 angefügt. Somit werden eine zusätzliche Redundanz und ein wirksamer Kontrollmechanismus erzeugt. Sende- und Empfangseinheiten können dabei das gleiche Berechnungsverfahren oder eine invers-redundante Berechnung durchführen.

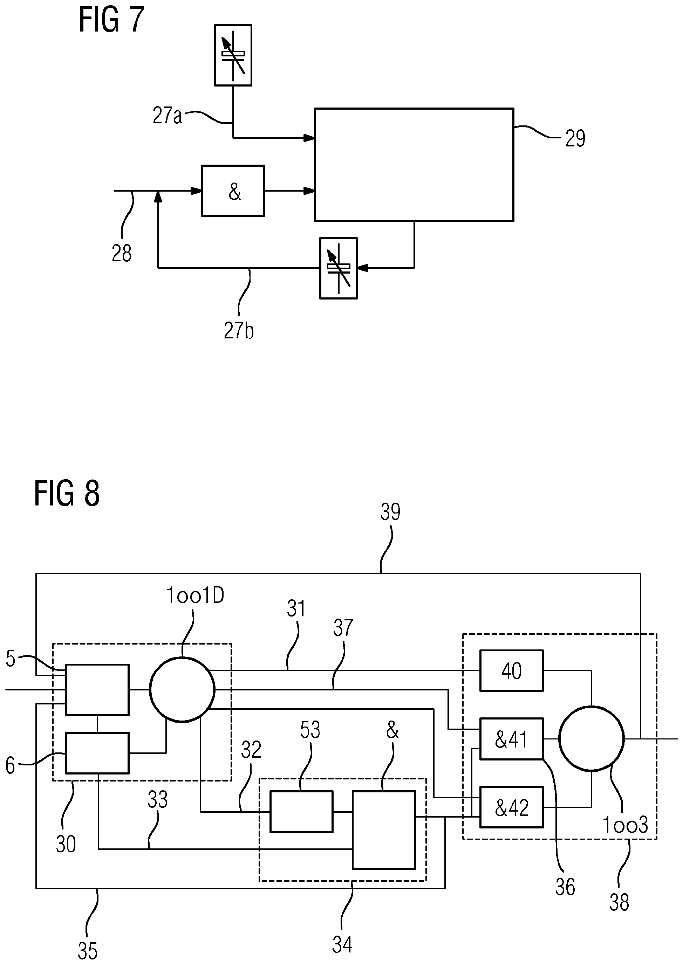

Sicherheitsrelevante analoge Signale 28 können nach Fig 7 entweder durch redundante Analog/Digital-Wandler und / oder einkanalig über einen Signalmultiplexer der Sicherheitsarchitektur zugeführt werden. Gemäss einer besonderen Ausführungsform wird zur Prüfung der Funktionsfähigkeit über eine veränderbare Spannungsreferenz ein definiertes Referenzsignal 27a, 27b auf den Analogeingang der A/D-Wandler der Überwachungseinheit für analoge Signale 29 geschaltet. Anschliessend wird eine Prüfung durchgeführt.

Mit Hilfe dieser Dynamisierung der Schnittstellensignale erhalten alle einkanalig ausgeführten Eingangssignale eine zusätzliche Kontrollmöglichkeit. Ausgangssignale können durch Rückführung auf Eingänge kontrolliert werden.

Um weitere zufällig auftretende Zweitfehler erkennen zu können, erzeugt die 1oo1D Architektur 30 aus Fig 8 zum eigentlichen Ausgangssignal 31 zwei weitere Kontrollsignale 32, 33. Die Kontrollsignale 32, 33 kennzeichnen dabei eine Fehlerfreiheit. Mindestens ein Kontrollsignal ist ein dynamisch wechselndes Signal. Das mindestens eine dynamisch wechselnde Signal kann durch einen weiteren Prüfblock 34 geprüft werden.

Nach Fig 8 umfasst der Prüfblock 34 einen Überwachungs- und Diagnosekanal 53. Vorzugsweise weist der Prüfblock 34 also einen Überwachungs- und Diagnosekanal 53 mit mindestens einem Eingang auf, wobei der mindestens eine Eingang des Überwachungs- und Diagnosekanals 53 des Prüfblockes 34 ausgebildet ist, mindestens eines 32 der Ausgangssignale der Überwachungseinheit 30 zu empfangen.

Im Kontrollsignal 32 sind dabei nach einem Berechnungsverfahren festgelegte Datenwerte und ein zeitlicher Kontrollmechanismus enthalten. Der zeitliche Kontrollmechanismus erlaubt eine zeitliche und logische Kontrolle. Das Kontrollsignal wechselt seinen Datenwert nach einem definierten Algorithmus. Damit wird ein hoher (dynamischer) Schutz vor Verfälschung sichergestellt.

Gemäss einer bevorzugten Ausführungsform wird das Kontrollsignal 32 durch eine Frage und Antwort Überwachung durchgeführt. Dabei erzeugt der weitere Prüfblock 34 einen 4-Bit Binärwert. Der 4-Bit Binärwert wird auf Nachfrage an die 1oo1D Architektur 30 übermittelt. Der 4-Bit Binärwert wechselt nach jeder erfolgreichen Prüfung nach dem Schema:
XOR der Bitwerte X3, X4. Er wird in X1 per Schiebebefehl integriert. Damit erhält die 1oo1D Architektur 30 eine wechselnde Aufgabe mit einem Umlauf von 16 Werten. Als Antwort auf jede Aufgabe (4-Bit Wert) muss die 1oo1D-Architektur 30 drei aufeinanderfolgende Antworten (8-Bit Werte) an den Prüfblock 34 innerhalb eines Watchdog-Fensters senden und nachfolgend noch eine Antwort ausserhalb des Watchdog-Fensters. Die Antworten sind festdefinierte Werte und werden durch den Prüfblock 34 geprüft. Nach erfolgreichen vier Zyklen findet eine Freigabe von Ausgangssignal 35 statt.

Nach Fig 8 umfasst die Überwachungseinheit 30 einen Überwachungs- und Diagnosekanal 6. Vorzugsweise weist die Überwachungseinheit 30 also einen Überwachungs- und Diagnosekanal 6 mit mindestens einem Ausgang auf, wobei der mindestens eine Ausgang des Überwachungs- und Diagnosekanals 6 der Überwachungseinheit 30 ausgebildet ist, für den Prüfblock 34 mindestens ein Kontrollsignal 33 bereitzustellen. Besonders bevorzugt entspricht die Architektur der Überwachungseinheit 30 einer 1oo1D-Architektur.

Zum Nachweis der Wirksamkeit von Prüfblock 34 werden die Kontrollsignale 32 und 33 durch die 1oo1D Architektur 30 zyklisch in ein Fehlersignal geändert. Daraus resultiert ein Ausgangssignal 35. Dieses wird durch einen weiteren Vergleicher 36 mit einem diversitär erzeugten Signal 37 geprüft.

Mit anderen Worten, die vorliegende Offenbarung betrifft einen Sicherheitseinrichtung umfassend eine Überwachungseinheit 30, einen Prüfblock 34 und eine Ausgangsstufe 38 mit mindestens einem Kontaktglied &41, wobei die Überwachungseinheit 30 mindestens zwei, vorzugsweise mindestens drei, Ausgänge aufweist und ausgebildet ist, mindestens zwei 32, 37, vorzugsweise mindestens drei 31, 32, 37, unterschiedliche Ausgangssignale für die Prüfung ihrer Fehlerfreiheit bereitzustellen.

Das Ergebnissignal führt bei korrekten Signalen zur Freigabe durch eine redundant aufgebaute Ausgangsstufe 38.

Mit anderen Worten, die Ausgangsstufe 38 stellt eine Abschaltfunktion bereit unter Berücksichtigung des Ergebnisses der vom Kontaktglied &41 vorgenommenen Verknüpfung und der Signalansteuerung aus Block 30 und 34.

Vorzugsweise ist der Prüfblock 34 demnach ausgebildet, für die Überwachungseinheit 30 mindestens ein Rückkopplungssignal 35 bereitzustellen.

Die Überwachungseinheit 30 ist vorzugsweise ausgebildet, zum Nachweis der Wirksamkeit von Prüfblock 34 mindestens eines 32 der Ausgangssignale der Überwachungseinheit 30 zyklisch in ein Fehlersignal zu ändern.

Die Überwachungseinheit 30 ist weiterhin bevorzugt ausgebildet, zum Nachweis der Wirksamkeit von Prüfblock 34 das Kontrollsignal 33 an dem mindestens einen Ausgang des Überwachungs- und Diagnosekanals 6 der Überwachungseinheit 30 zyklisch in ein Fehlersignal zu ändern.

Ein sicherer Anlagenzustand kann bei Anwendungen beispielsweise in der Verbrennungstechnik durch Unterbrechung der Stromversorgung und / oder Energieversorgung und / oder Spannungsversorgung der angeschlossenen Aktoren erreicht werden. Die Abschaltung der Stromversorgung und / oder Energieversorgung und / oder Spannungsversorgung erfolgt durch in Reihe angeordnete Kontaktglieder. Eine Freigabe erfolgt vorzugsweise nur dann, wenn alle Kontaktglieder geschlossen sind.

Die Ausgabewerte aller Ausgangsstufen 38 werden als (dynamische) Signale 39 wieder der 1oo1D-Architektur 30 zugeführt. Mithin entsteht ein (dynamischer) Sicherheitsüberwachungskreis. Die Rückführung der Signale 39 kann dabei einzeln oder als gemeinsames Signal erfolgen.

Ein auftretender Fehler führt hierbei zu einer Sicherheitsabschaltung (des Systems).

Vorzugsweise befindet sich das mindestens eine Kontaktglied &41 der Ausgangsstufe 38 also in einem Zustand OFFEN oder GESCHLOSSEN, und die Ausgangsstufe 38 umfasst mindestens einen Ausgang und ist ausgebildet, den Zustand des mindestens einen Kontaktgliedes &41 als Rückkopplungssignal 39 für die Überwachungseinheit 30 bereitzustellen.

Vorzugsweise umfasst dabei die Überwachungseinheit 30 mindestens einen Eingang und der mindestens eine Eingang der Überwachungseinheit 30 ist ausgebildet, ein Rückkopplungssignal 39 aus der Ausgangsstufe 38 zu empfangen.

Die Freigabe von Kontaktglied 40 erfolgt dabei direkt von der 1oo1D-Architektur 30. Das Kontaktglied &41 wird durch zwei (dynamische) Freigabesignale aus Prüfblock 34 und aus der 1oo1D-Architektur 30 gesteuert. Das Freigabesignal für Kontaktglied &42 benötigt die Dynamik aus Prüfblock 34 und aus der 1oo1D-Architektur 30.

Mit anderen Worten, die vorliegende Offenbarung betrifft eine Sicherheitseinrichtung, wobei die Überwachungseinheit 30 ausgebildet ist, mindestens ein Freigabesignal 37 für eine Abschaltfunktion bereitzustellen, und wobei der Prüfblock 34 ausgebildet ist, mindestens ein Freigabesignal für eine Abschaltfunktion bereitzustellen und wobei der Prüfblock 34 mindestens einen Eingang aufweist und ausgebildet ist, mindestens eines 32 der Ausgangssignale der Überwachungseinheit 30 zu überwachen.

Mit anderen Worten, der Prüfblock 34 weist mindestens einen Ausgang auf und ist ausgebildet, mindestens ein Freigabesignal 35 für eine Abschaltfunktion bereitzustellen.

Mit anderen Worten, das mindestens eine Kontaktglied &41 der Ausgangsstufe 38 weist mindestens zwei Eingänge auf und ist ausgebildet, mindestens eines 37 der Ausgangssignale der Überwachungseinheit 30 mit dem mindestens einen Freigabesignal des Prüfblockes 34 zu einem Ergebnis verknüpfen.

Vorzugsweise weist die Ausgangsstufe 38 mindestens ein weiteres Kontaktglied 40 mit einem Eingang auf, wobei das mindestens eine weitere Kontaktglied 40 der Ausgangsstufe 38 ausgebildet ist, direkt durch eines 31 der Ausgangssignale der Überwachungseinheit 30 freigegeben zu werden.

Besonders bevorzugt stellt dabei die Ausgangsstufe (38) ihre Abschaltfunktion unter Berücksichtigung der Freigabe von Kontaktglied 40 bereit.

Erweiterungen sind in Form paralleler Kontaktglieder zu Kontaktglied &42 möglich und / oder vorgesehen. Dazu werden mehrere Ansteuerungen aus der 1oo1D-Architektur 30 benötigt. Das Freigabesignal 35 kann mehrfach verwendet werden.

Das Prinzip der Überwachung besteht mithin darin, dass nur ein fehlerfreies Gesamtsystem zu einer Anlagenfreigabe führen kann. Bereits Erstfehler führen zu einer Abschaltfunktion durch unterschiedliche Sicherheitsüberwachungskreise.

Mithilfe dieser aufgebauten Architektur können mehrere sicherheitsrelevante Funktionen in einem System behandelt werden. So ist es möglich, eine Vielzahl unterschiedlich ausgeführter Eingangssignale zu überwachen. Ein Fehler im Überwachungssystem und / oder ein Auftreten eines sicherheitsrelevanten Ereignisses führt so zu einer sicherheitsgerichteten Systemreaktion.

Die Komplexität der Überwachungseinheiten wird dabei auf eine einfache redundante Abschaltfunktion reduziert. Damit sind Einsparungen gegenüber vollständig redundant aufgebauten Sicherheitsarchitekturen möglich.

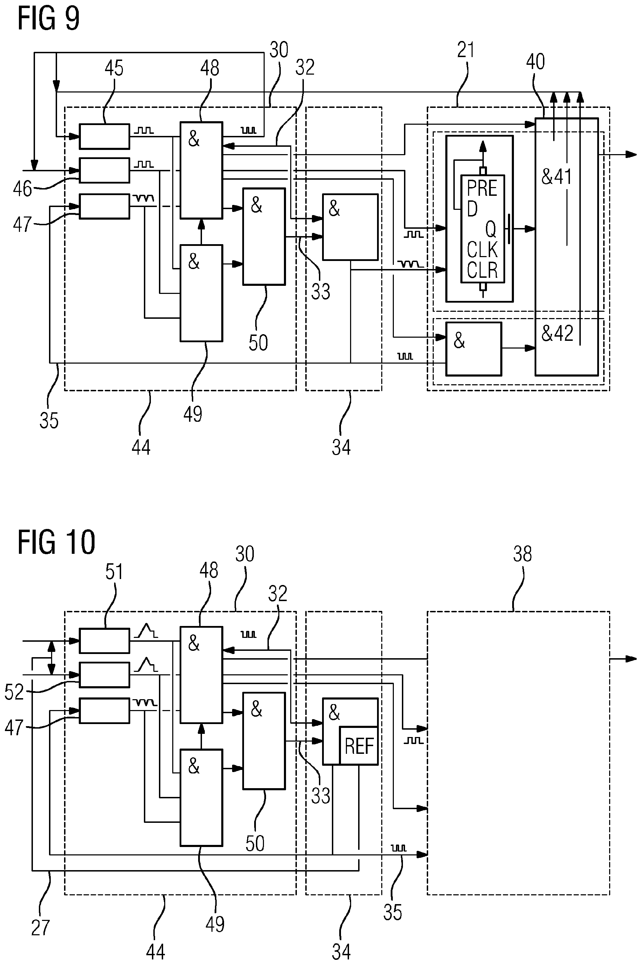

In der praktischen Umsetzung nach Fig 9 ist die 1oo1D-Architektur 30 durch eine integrierte Lockstep-Architektur (einen redundanten (Mehrkern-) Prozessor) 44 realisiert. Der redundante (Mehrkern-) Prozessor umfasst hier neben drei Überwachungseinheiten 45, 46, 47 einen Hauptprozessor 48 und einen Prüfprozessor 49. Weiterhin ist ein Vergleichselement 50 vorhanden.

Der redundante (Mehrkern-) Prozessor 44 zeichnet sich dadurch aus, dass die Verarbeitung sicherheitsrelevanter Signale in einem überwachten Funktionskanal ausgeführt wird. Die Überwachung und Diagnostik ist dabei so hochwertig, dass Fehler sicher erkannt werden können.

Geeignete redundante (Mehrkern-) Prozessoren 44 können von Texas Instruments (Hercules-Serie TMS570, RM4x), Freescale (MPC564x-Serie, SPC5744x) oder STM (SPC56EL54-Serie)bezogen werden. Diese Aufzählung erhebt keinen Anspruch auf Vollständigkeit.

Es werden mehrere unterschiedliche Signale 32, 33 aus dem redundanten (Mehrkern-) Prozessor 44 erzeugt. Diese werden weiter durch einen Prüfblock 34 geprüft. Der Prüfblock 34 kann in der praktischen Umsetzung durch einen integrierten Schaltkreis ausgeführt werden. Der integrierte Schaltkreis führt beispielsweise eine wert- und zeitdiskrete Überwachung des (dynamischen) Kontrollsignals 32 durch. Als Ergebnis wird das Freigabesignal 35 erzeugt. Das Freigabesignal 35 weist eine definierte Dynamik auf.

Geeignete Überwachungsblöcke 34 sind beispielsweise von Texas Instruments (TPS65381) oder Freescale (MC33908)) erhältlich. Diese Aufzählung erhebt keinen Anspruch auf Vollständigkeit.

Diese Dynamik ist für die Freigabe und / oder Ansteuerung der Kontaktglieder &41 und &42 in der Ausgangsstufe 38 erforderlich. Damit ergibt sich die Abhängigkeit, wonach das Ergebnis der ersten Einheit 30 durch die zweite Einheit 34 zyklisch geprüft wird. Ein (dynamisch erzeugtes) Prüfergebnis zur Freigabe der Kontaktglieder &41 und &42 in der Ausgangsstufe 38 ist zusammen mit mindestens einem (dynamischen) Ansteuersignal aus der 1oo1D-Architektur 30 erforderlich.

Vorzugsweise weist also die Überwachungseinheit 30 mindestens einen Eingang auf und der mindestens eine Eingang der Überwachungseinheit 30 ist ausgebildet, ein Rückkopplungssignal 35 aus dem Prüfblock 34 zu empfangen und die Überwachungseinheit 30 ist ausgebildet, ein Rückkopplungssignal 35 aus dem Prüfblock 34, welches auf ein in ein Fehlersignal geändertes Signal 32, 33 aus der Überwachungseinheit 30 folgt, zum Nachweis der Wirksamkeit von Prüfblock 34 zu verwenden.

Vorzugsweise ist dabei die Ausgangsstufe 38 ausgebildet, das Rückkopplungssignal 35 des Prüfblocks mit einem Ausgangssignal der Überwachungseinheit anhand eines Kontaktgliedes &42 zu verknüpfen, um bei nachgewiesener Nicht-Wirksamkeit des Prüfblockes 34 anhand des Kontaktgliedes &42 der Ausgangsstufe eine Abschaltung und / oder Verriegelung vorzunehmen.

Vorzugsweise ist ferner die Überwachungseinheit 30 ausgebildet, bei nachgewiesener Nicht-Wirksamkeit des Prüfblockes 34 ein Ausgangssignal 31, 37 so bereitzustellen, dass der Empfang des Ausgangssignals 31, 37 durch ein Kontaktglied &41 der Ausgangsstufe 38 die Abschaltfunktion der Ausgangsstufe 38 aktiviert.

Gemäss einer bevorzugten Ausführungsform wird die Ausgangsstufe 38 beim Auftreten eines Fehlers in der Diagnose- und Überwachungseinheit verriegelt. So wird vor Eintreten eines Mehrfachfehlers ein Fehlerindikator in den Speicherbereich des (Mehrkern-) Prozessors 44 und / oder in einem externen Speicher (vorzugweise nichtflüchtig) gespeichert. Der Inhalt dieses Speicherbereichs wird in die Generierung des Kontrollsignals 32 eingebunden. Entsprechend kann bei einem Mehrfachfehler der 1oo1D-Architektur 30 eine Sicherheitsverriegelung durch den Prüfblock 34 und die Ausgangsstufe 38 stattfinden.

Vorzugsweise ist die Überwachungseinrichtung 30 also ausgebildet, ein Ausgangssignal 31, 37, welches geeignet ist, die Abschaltfunktion der Ausgangsstufe 38 zu aktivieren, intern oder extern und flüchtig oder nichtflüchtig zu speichern. Weiterhin bevorzugt ist die Überwachungseinrichtung 30 ausgebildet, ein solches Signal aus einem internen oder externen und flüchtigen oder nichtflüchtigen Speicher zu lesen. Bevorzugt ist die Überwachungseinrichtung 30 zudem ausgebildet, ein so aus einem Speicher gelesenes Signal auszuwerten. Besonders bevorzugt ist die Überwachungseinrichtung ausgebildet, infolge der Auswertung des ausgelesenen Signals mindestens ein Ausgangssignal 31, 37 so zu setzen, dass die Abschaltfunktion der Ausgangsstufe 38 aktiviert wird und / oder aktiviert bleibt. Folglich wird die Ausgangsstufe verriegelt oder bleibt verriegelt.

Dasselbe gilt unabhängig davon auch für die Ausgangsstufe 38 und deren Ausgangssignal(e) 39. Auch die Ausgangsstufe 38 ist vorzugsweise ausgebildet zum Speicherung, zum Lesen, zur Auswertung eines Signals im Hinblick auf eine Verriegelung.

Sicherheitsrelevante analoge Signale können nach Fig 10 entweder durch redundante Analog/Digital-Wandler 51, 52 und / oder einkanalig über einen Signalmultiplexer der Sicherheitsarchitektur zugeführt werden. Zur Prüfung der Funktionsfähigkeit wird über den Prüfblock 34 und / oder über eine veränderbare Spannungsreferenz ein definiertes Referenzsignal 27 auf den Analogeingang der A/D-Wandler geschaltet. Das Prüfergebnis kann in gleicher Weise wie zuvor mit der Generierung des Freigabesignals 32 verknüpft sein. Die Referenzsignale können dabei direkt auf die analogen Eingangsgrössen und / oder über Signalmultiplexer geschaltet werden. Die Prinzipien der dynamischen Prüfung werden dabei beibehalten.

Vorzugsweise weist demnach die Überwachungseinheit 30 mindestens einen Eingang zum Empfang sicherheitsrelevanter Signale auf. Vorzugsweise umfasst die Überwachungseinheit 30 mindestens einen Analog/Digital-Wandler 51, 52 zur Zuführung mindestens eines sicherheitsrelevanten analogen Signals.

Es ist vorgesehen, eine Sicherheitsarchitektur gemäss der vorliegenden Offenbarung auch zur Steuerung und / oder Regelung sowie Überwachung von Brennstoffzellen einzusetzen. Jener Einsatz kann sich sowohl auf Festoxidbrennstoffzellen als auch auf Polymerelektrolytbrennstoffzellen beziehen. Ferner wird in Betracht gezogen, die Sicherheitsarchitektur gemäss der vorliegenden Offenbarung zur Steuerung und / oder Regelung sowie zur Überwachung von Batterien einzusetzen. Dabei geht es insbesondere um die Steuerung und / oder Regelung sowie Überwachung von Redox-Fluss-Batterien wie beispielsweise Vanadium-Redox-Akkumulatoren, Natriumbromid-Redox-Akkumulatoren und / oder Zink-Brom-Akkumulatoren. Auch die die Steuerung und / oder Regelung sowie Überwachung von Redox-Fluss Batterien auf Basis organischer Chinonen ist vorgesehen.

Teile einer Sicherheitsarchitektur oder eines Verfahrens gemäß der vorliegenden Offenbarung können als Hardware, als Softwaremodul, welches von einer Recheneinheit ausgeführt wird, oder anhand eines Cloud-Rechners oder anhand einer Kombination der vorgenannten Möglichkeiten realisiert werden. Die Software mag eine Firmware, einen Hardware-Treiber, der innerhalb eines Betriebssystems ausgeführt wird, oder ein Anwendungsprogramm umfassen. Die vorliegende Offenbarung bezieht sich also auch auf ein Rechnerprogramm-Produkt, welches die Merkmale dieser Offenbarung enthält bzw. die erforderlichen Schritte ausführt. Bei Realisierung als Software können die beschriebenen Funktionen gespeichert werden als eine oder mehrere Befehle auf einem Rechner-lesbaren Medium. Einige Beispiele Rechner-lesbarer Medien schliessen Arbeitsspeicher (RAM), magnetischen Arbeitsspeicher (MRAM), ausschliesslich lesbaren Speicher (ROM), Flash-Speicher, elektronisch programmierbares ROM (EPROM), elektronisch programmierbares und löschbares ROM (EEPROM), Register einer Recheneinheit, eine Festplatte, eine auswechselbare Speichereinheit, einen optischen Speicher, oder jegliches geeignete Medium ein, auf welches durch einen Rechner oder durch andere IT-Vorrichtungen und Anwendungen zugegriffen werden kann.

Das Genannte bezieht sich auf einzelne Ausführungsformen der Offenbarung. Verschiedene Änderungen an den Ausführungsformen können vorgenommen werden, ohne von der zu Grunde liegenden Idee abzuweichen und ohne den Rahmen dieser Offenbarung zu verlassen. Der Gegenstand der vorliegenden Offenbarung ist definiert über deren Ansprüche. Es können verschiedenste Änderungen vorgenommen werden ohne den Schutzbereich der nachfolgenden Ansprüche zu verlassen.

### Bezugszeichen

- 1: Eingang
- 2: Ausgang
- 3: Überwachungseinheit
- 4a: Überwachungseinheit
- 4b: Überwachungseinheit
- 5: Überwachungseinheit
- 6: Überwachungs- und Diagnosekanal
- 7: Kanal der Überwachung
- 8: Kanal der Überwachung
- 9: Kanal der Überwachung
- 10: statische(s) Signal(e)
- 11: zusätzliche(s) Testsignal (e) (
- 12: Eingangssignal(e)
- 13: Ausgangssignal(e)
- 14: Testsignal(e)
- 15: Nutzdaten
- 16: Prüfdaten
- 17: Funktionseinheit
- 18: Funktionseinheit
- 19: Ausgangstreiber und / oder Relaiskontakt
- 27, 27a, 27b: Referenzsignal(e)
- 28: sicherheitsrelevante(s) analoge(s) Signal(e)
- 29: Überwachungseinheit für analoge Signale
- 30: (1oo1D)-Architektur
- 31: Ausgangssignal
- 32: weiteres Kontrollsignal
- 33: weiteres Kontrollsignal
- 34: Prüfblock
- 35: Ausgangsignal
- 36: weiterer Vergleicher
- 37: diversitär erzeugtes Signal
- 38: Ausgangsstufe
- 39: zurückgeführtes (dynamisches) Signal
- 40: Kontaktglied
- &41: Kontaktglied
- &42: Kontaktglied
- 44: (Mehrkern-) Prozessor
- 45: Überwachungseinheit
- 46: Überwachungseinheit
- 47: Überwachungseinheit
- 48: Hauptprozessor
- 49: Prüfprozessor
- 50: Vergleichselement
- 51: A/D-Wandler
- 52: A/D-Wandler
- 53: Überwachungs- und Diagnosekanal

## Patentansprüche

1. Brenneranlage, insbesondere Gasbrenneranlage oder ölbrenneranlage, mit einer Sicherheitseinrichtung, die Sicherheitseinrichtung umfassend eine Überwachungseinheit (30), einen Prüfblock (34) und eine Ausgangsstufe (38) mit mindestens einem Kontaktglied (&41),
wobei die Überwachungseinheit (30) mindestens zwei, vorzugsweise mindestens drei, Ausgänge aufweist und ausgebildet ist, mindestens zwei (32, 37), vorzugsweise mindestens drei (31, 32, 37), unterschiedliche Ausgangssignale für die Prüfung ihrer Fehlerfreiheit bereitzustellen,
wobei die Überwachungseinheit (30) ausgebildet ist, mindestens ein Ausgabesignal als Freigabesignal (37) für eine Abschaltfunktion bereitzustellen,
wobei der Prüfblock (34) mindestens einen Eingang aufweist und ausgebildet ist, mindestens eines (32) der Ausgangssignale der Überwachungseinheit (30) zu überwachen,
wobei der Prüfblock (34) mindestens einen Ausgang aufweist und ausgebildet ist, mindestens ein weiteres Freigabesignal für die Abschaltfunktion bereitzustellen,
**dadurch gekennzeichnet, dass**
das mindestens eine Kontaktglied (&41) der Ausgangsstufe (38) mindestens zwei Eingänge aufweist und ausgebildet ist, mindestens eines (37) der Ausgangssignale der Überwachungseinheit (30) mit dem mindestens einen weiteren Freigabesignal des Prüfblockes (34) zu einem Ergebnis verknüpfen,
und dass
die Ausgangsstufe (38) die Abschaltfunktion umfasst und die Abschaltfunktion ausgebildet ist, unter Berücksichtigung des Ergebnisses der vom Kontaktglied (&41) vorgenommenen Verknüpfung aktiviert zu werden.

2. Brenneranlage nach Anspruch 1, wobei der Prüfblock (34) einen Überwachungs- und Diagnosekanal (53) mit mindestens einem Eingang aufweist, und wobei der mindestens eine Eingang des Überwachungs- und Diagnosekanals (53) des Prüfblockes (34)ausgebildet ist, mindestens eines (32) der Ausgangssignale der Überwachungseinheit (30) zu empfangen.

3. Brenneranlage nach einem der Ansprüche 1 oder 2, wobei die Überwachungseinheit (30) einen Überwachungs- und Diagnosekanal (6) mit mindestens einem Ausgang aufweist, und wobei der mindestens eine Ausgang des Überwachungs- und Diagnosekanals (6) der Überwachungseinheit (30) ausgebildet ist, für den Prüfblock (34) mindestens ein Kontrollsignal (33) bereitzustellen.

4. Brenneranlage nach einem der Ansprüche 1 bis 3, wobei die Ausgangsstufe (38) mindestens ein weiteres Kontaktglied (40) mit einem Eingang aufweist, wobei das mindestens eine weitere Kontaktglied (40) der Ausgangsstufe (38) ausgebildet ist, direkt durch eines (31) der Ausgangssignale der Überwachungseinheit (30) freigegeben zu werden.

5. Brenneranlage nach Anspruch 4, wobei die Ausgangsstufe (38) ausgebildet ist, ihre Abschaltfunktion zu aktivieren unter Berücksichtigung der Freigabe von Kontaktglied (40).

6. Brenneranlage nach einem der Ansprüche 1 bis 5, wobei der Prüfblock (34) ausgebildet ist, für die Überwachungseinheit (30) ein Rückkopplungssignal (35) bereitzustellen.

7. Brenneranlage nach einem der Ansprüche 1 bis 6, wobei die Überwachungseinheit (30) ausgebildet ist zum Nachweis der Wirksamkeit von Prüfblock (34) mindestens eines (32) der Ausgangssignale der Überwachungseinheit (30) zyklisch in ein Fehlersignal zu ändern.

8. Brenneranlage nach Anspruch 3, wobei die Überwachungseinheit (30) ausgebildet ist, zum Nachweis der Wirksamkeit von Prüfblock (34) das Kontrollsignal (33) an dem mindestens einen Ausgang des Überwachungs- und Diagnosekanals (6) der Überwachungseinheit (30) zyklisch in ein Fehlersignal zu ändern.

9. Brenneranlage nach Anspruch 6 und nach einem der Ansprüche 7 oder 8, wobei die Überwachungseinheit (30) mindestens einen Eingang aufweist und wobei der mindestens eine Eingang der Überwachungseinheit (30) ausgebildet ist, das Rückkopplungssignal (35) aus dem Prüfblock (34) zu empfangen und wobei die Überwachungseinheit (30) ausgebildet ist, das Rücckopplungssignal (35) aus dem Prüfblock (34), welches auf ein in ein Fehlersignal geändertes Signal (32, 33) aus der Überwachungseinheit (30) folgt, zum Nachweis der Wirksamkeit von Prüfblock (34) zu verwenden.

10. Brenneranlage nach Anspruch 9, wobei die Überwachungseinheit (30) ausgebildet ist, bei nachgewiesener Nicht-Wirksamkeit des Prüfblockes (34) ein Ausgangssignal (31, 37) so bereitzustellen, dass der Empfang des Ausgangssignals (31, 37) durch das Kontaktglied (&41) der Ausgangsstufe (38) die Abschaltfunktion der Ausgangsstufe (38) aktiviert.

11. Brenneranlage nach einem der vorangegangenen Ansprüche, wobei das mindestens eine Kontaktglied (&41) der Ausgangsstufe (38) sich in einem Zustand OFFEN oder GESCHLOSSEN befindet, und wobei die Ausgangsstufe (38) mindestens einen Ausgang umfasst und ausgebildet ist, den Zustand des mindestens einen Kontaktgliedes (&41) als Rückkopplungssignal (39) für die Überwachungseinheit (30) bereitzustellen.

12. Brenneranlage nach Anspruch 11, wobei die Überwachungseinheit (30) mindestens einen Eingang aufweist und wobei der mindestens eine Eingang der Überwachungseinheit (30) ausgebildet ist, ein Rückkopplungssignal (39) aus der Ausgangsstufe (38) zu empfangen.

13. Brenneranlage nach einem der vorangegangenen Ansprüche, wobei die Überwachungseinheit (30) ausgebildet ist, mindestens ein Ausgangssignal (31, 37) der Überwachungseinheit (30) zu Kontrollzwecken mittels Testsignalen zu dynamisieren.

14. Brenneranlage nach einem der vorangegangenen Ansprüche, wobei die Überwachungseinheit (30) mindestens einen Eingang zum Empfang sicherheitsrelevanter Signale aufweist und wobei vorzugsweise die Überwachungseinheit (30) mindestens einen Analog/Digital-Wandler (51, 52) zur Zuführung mindestens eines sicherheitsrelevanten analogen Signals aufweist.

## Claims

1. Burner system, in particular gas burner system or oil burner system, with a safety device, the safety device comprising a monitoring unit (30), a test block (34) and an output stage (38) having at least one contact member (&41),
wherein the monitoring unit (30) comprises at least two, preferably at least three, outputs and is configured to provide at least two (32, 37), preferably at least three (31, 32, 37), different output signals for testing its absence from faults,
wherein the monitoring unit (30) is configured to provide at least one output signal as an enabling signal (37) for a switch-off function,
wherein the test block (34) comprises at least one input and is configured to monitor at least one (32) of the output signals of the monitoring unit (30),
wherein the test block (34) comprises at least one output and is configured to provide at least one further enabling signal for a switch-off function,
**characterised in that**
the at least one contact member (&41) of the output stage (38) has at least two inputs and is configured to link at least one (37) of the output signals of the monitoring unit (30) to the at least one further enabling signal of the test block (34) in order to obtain a result,
and that
the output stage (38) comprises the switch-off function and the switch-off function is configured to be activated by taking into consideration the result of the linking undertaken by the contact member (&41).

2. Burner system according to claim 1, wherein the test block (34) has a monitoring and diagnostic channel (53) having at least one input, and wherein the at least one input of the monitoring and diagnostic channel (53) of the test block (34) is configured to receive at least one (32) of the output signals of the monitoring unit (30).

3. Burner system according to one of claims 1 or 2, wherein the monitoring unit (30) comprises a monitoring and diagnostic channel (6) having at least one output and wherein the at least one output of the monitoring and diagnostic channel (6) of the monitoring unit (30) is configured to provide at least one control signal (33) for the test block (34).

4. Burner system according to one of claims 1 to 3, wherein the output stage (38) comprises at least one further contact member (40) having an input, wherein the at least one further contact member (40) of the output stage (38) is configured to be enabled directly by one (31) of the output signals of the monitoring unit (30).

5. Burner system according to claim 4, wherein the output stage (38) is configured to activate its switch-off function by taking into consideration the enabling of the contact member (40).

6. Burner system according to one of claims 1 to 5, wherein the test block (34) is configured to provide a feedback signal (35) for the monitoring unit (30).

7. Burner system according to one of claims 1 to 6, wherein the monitoring unit (30) is configured to alter at least one (32) of the output signals of the monitoring unit (30) cyclically into a fault signal for proving the effectiveness of the test block (34).

8. Burner system according to claim 3, wherein the monitoring unit (30) is configured to alter the control signal (33) on the at least one output of the monitoring and diagnostic channel (6) of the monitoring unit (30) cyclically into a fault signal for proving the effectiveness of the test block (34).

9. Burner system according to claim 6, and according to one of claims 7 or 8, wherein the monitoring unit (30) comprises at least one input and wherein the at least one input of the monitoring unit (30) is configured to receive the feedback signal (35) from the test block (34), and wherein the monitoring unit (30) is configured to use a feedback signal (35) from the test block (34) which follows a signal (32, 33) from the monitoring unit (30) changed into a fault signal, for proving the effectiveness of the test block (34).

10. Burner system according to claim 9, wherein the monitoring unit (30) is configured to provide an output signal (31, 37) when the non-effectiveness of the test block (34) is proven, such that the reception of the output signal (31, 37) activates the switch-off function of the output stage (38) by a contact member (&41) of the output stage (38).

11. Burner system according to one of the preceding claims, wherein the at least one contact member (&41) of the output stage (38) is in an OPEN state or CLOSED state, and wherein the output stage (38) comprises at least one output and is configured to provide the state of the at least one contact member (&41) as a feedback signal (39) for the monitoring unit (30) .

12. Burner system according to claim 11, wherein the monitoring unit (30) comprises at least one input and wherein the at least one input of the monitoring unit (30) is configured to receive a feedback signal (39) from the output stage (38).

13. Burner system according to one of the preceding claims, wherein the monitoring unit (30) is configured to dynamise at least one output signal (31, 37) of the monitoring unit (30) for control purposes by means of test signals.

14. Burner system according to one of the preceding claims, wherein the monitoring unit (30) comprises at least one input for receiving safety-relevant signals and wherein preferably the monitoring unit (30) comprises at least one analogue/digital converter (51, 52) for supplying at least one safety-relevant analogue signal.

## Revendications

1. Installation de brûleur, en particulier installation de brûleur à gaz ou installation de brûleur à fioul, comprenant un dispositif de sécurité, le dispositif de sécurité comportant un module de surveillance (30), un bloc de contrôle (34) et un étage de sortie (38) comportant au moins un élément de contact (&41),
dans laquelle le module de surveillance (30) comprend au moins deux, de préférence au moins trois sorties et est configuré pour fournir au moins deux (32, 37), de préférence au moins trois (31, 32, 37) signaux de sortie différents pour vérifier son exactitude,
dans laquelle le module de surveillance (30) est configuré pour fournir au moins un signal de sortie sous forme d'un signal de validation (37) pour une fonction d'arrêt,
dans laquelle le bloc de contrôle (34) comprend au moins une entrée et est configuré pour surveiller au moins un (32) des signaux de sortie du module de surveillance (30),
dans laquelle le bloc de contrôle (34) comprend au moins une sortie et est configuré pour fournir au moins un signal de validation supplémentaire pour la fonction d'arrêt,
**caractérisée en ce que**
le au moins un élément de contact (&41) de l'étage de sortie (38) comprend au moins deux entrées et est configuré pour associer au moins un (37) des signaux de sortie du module de surveillance (30) à au moins un signal de validation supplémentaire du bloc de contrôle (34) afin d'obtenir un résultat, et
**en ce que** l'étage de sortie (38) comprend la fonction d'arrêt et la fonction d'arrêt est conçue pour être activée en tenant compte du résultat de l'association opérée par l'élément de contact (&41).

2. Installation de brûleur selon la revendication 1, dans laquelle le bloc de contrôle (34) comprend un canal de surveillance et de diagnostic (53) comportant au moins une entrée, et dans laquelle la au moins une entrée du canal de surveillance et de diagnostic (53) du bloc de contrôle (34) est conçue pour recevoir au moins un (32) des signaux de sortie du module de surveillance (30).

3. Installation de brûleur selon la revendication 1 ou 2, dans laquelle le module de surveillance (30) comprend un canal de surveillance et de diagnostic (6) comportant au moins une sortie, et dans laquelle la au moins une sortie du canal de surveillance et de diagnostic (6) du module de surveillance (30) est configurée pour fournir au moins un signal de contrôle (33) pour le bloc de contrôle (34).

4. Installation de brûleur selon l'une des revendications 1 à 3, dans laquelle l'étage de sortie (38) comprend au moins un élément de contact supplémentaire (40) comportant une entrée, et dans laquelle le au moins un élément de contact supplémentaire (40) de l'étage de sortie (38) est configuré pour être validé directement par un (31) des signaux de sortie du module de surveillance (30).

5. Installation de brûleur selon la revendication 4, dans laquelle l'étage de sortie (38) est configuré pour activer sa fonction d'arrêt en tenant compte de la validation de l'élément de contact (40).

6. Installation de brûleur selon l'une des revendications 1 à 5, dans laquelle le bloc de contrôle (34) est configuré pour fournir un signal de retour (35) au module de surveillance (30).

7. Installation de brûleur selon l'une des revendications 1 à 6, dans laquelle le module de surveillance (30) est configuré pour modifier cycliquement, afin de prouver l'efficacité du bloc de contrôle (34), au moins un (32) des signaux de sortie du module de surveillance (30) en un signal d'erreur.

8. Installation de brûleur selon la revendication 3, dans laquelle le module de surveillance (30) est configuré pour modifier cycliquement le signal de contrôle (33) à la au moins une sortie du canal de surveillance et de diagnostic (6) du module de surveillance (30) en un signal d'erreur afin de prouver l'efficacité du bloc de contrôle (34).

9. Installation de brûleur selon la revendication 6 et l'une des revendications 7 ou 8, dans laquelle le module de surveillance (30) comprend au moins une entrée et la au moins une entrée du module de surveillance (30) est configurée pour recevoir le signal de retour (35) du bloc de contrôle (34) et dans laquelle le module de surveillance (30) est configuré pour utiliser le signal de retour (35) émis par le bloc de contrôle (34) qui suit un signal (32, 33) modifié en un signal d'erreur émis par le module de surveillance (30), afin de prouver l'efficacité du bloc de contrôle (34).

10. Installation de brûleur selon la revendication 9, dans laquelle le module de surveillance (30) est configuré, en cas de non-efficacité établie du bloc de contrôle (34), pour fournir un signal de sortie (31, 37) de manière à ce que la réception du signal de sortie (31, 37) par l'élément de contact (&41) de l'étage de sortie (38) active la fonction d'arrêt de l'étage de sortie (38).

11. Installation de brûleur selon l'une des revendications précédentes, dans laquelle le au moins un élément de contact (&41) de l'étage de sortie (38) se trouve dans un état OUVERT ou FERMÉ, et dans laquelle l'étage de sortie (38) comprend au moins une sortie et est configuré pour fournir l'état du au moins un élément de contact (&41) à titre de signal de retour (39) au module de surveillance (30) .

12. Installation de brûleur selon la revendication 11, dans laquelle le module de surveillance (30) comprend au moins une entrée et la au moins une entrée du module de surveillance (30) est configurée pour recevoir un signal de retour (39) de l'étage de sortie (38).

13. Installation de brûleur selon l'une des revendications précédentes, dans laquelle le module de surveillance (30) est configuré pour dynamiser au moins un signal de sortie (31, 37) du module de surveillance (30) à des fins de contrôle au moyen de signaux de test.

14. Installation de brûleur selon l'une des revendications précédentes, dans laquelle le module de surveillance (30) comprend au moins une entrée pour recevoir des signaux relatifs à sécurité et dans laquelle, de préférence, le module de surveillance (30) comprend au moins un convertisseur analogique/numérique (51, 52) pour acheminer au moins un signal analogique relatif à sécurité.
